# EUROPEAN PATENT APPLICATION

(11) **EP 4 694 210 A1**
(43) Date of publication of application: **11.02.2026**
(21) Application number: 25153007.7
(22) Date of filing: 21.01.2025
(51) Int. Cl.: H04R 25/00, G01S 3/808, H04R 1/40, H04R 3/00

(54) **HEARING DEVICE WITH MACHINE LEARNING MODEL TO DETERMINE DIRECTION OF ARRIVAL**

(30) Priority: 06.08.2024 US 202463679827 P
(71) Applicant: Starkey Laboratories, Inc., Eden Prairie, MN 55344 (US)
(72) Inventor: POLLAK, Liron, Eden Prairie, 55344 (US); GRANGE, Jacques, Eden Prairie, 55344 (US); MARQUARDT, Daniel, Eden Prairie, 55344 (US); SHIMON, Carmi, Tel Aviv (IL)
(74) Representative: Crowell & Moring U.K. LLP

(57) **Abstract**

A hearing device has two or more different microphones and a processor operably coupled to the two or more microphones. The processor is operable via instructions to obtain time domain signals from the microphones and transform the time domain signals into respective frequency transform streams. The frequency transform streams characterize phase information in the time domain signals. The processor further determines, from the frequency transform streams, features indicative of directional information of one or more sound sources. The processor inputs the features to a classifier neural network. The classifier network is trained to classify the features into probabilities of angles of arrival of the sound sources. Based on the classification of the features, the processor estimates one or more directions of arrival (DOA) of the sound sources.

## Description

### SUMMARY

This application relates generally to ear-level electronic systems and devices, including hearing aids, personal amplification devices, and hearables. In one embodiment, a hearing system includes a first hearing device. The first hearing device includes two or more different microphones mounted in a housing of the first hearing device. A processor of the first hearing device is operably coupled to the two or more microphones. The processor operable via instructions to obtain time domain signals from the microphones and transform the time domain signals into respective frequency transform streams. The frequency transform streams characterize phase information in the time domain signals. The processor is further operable to determine, from the frequency transform streams, features indicative of directional information of one or more sound sources; input the features to a classifier neural network. The classifier network is trained to classify the features into probabilities of angles of arrival of the sound sources. The processor is further operable to, based on the classification of the features, estimate one or more directions of arrival (DOA) of the sound sources and use the estimated DOA to process sound in the first hearing device.

In another embodiment, a method of training a classifier neural network for direction of arrival (DOA) estimation involves installing one or more hearing devices into a test fixture and playing test audio from an array of transducers that emit the test audio at a plurality of different angles relative to the test fixture. The test audio is associated with the plurality of different angles in a test data set. The method further involves receiving time domain signals representing the test audio from two or more microphones of each the one or more hearing devices and transforming the time domain signals into frequency transform streams. The frequency transform streams characterize phase information in the two or more time domain signals. The frequency transform streams are input to train a feature extraction neural network to extract features that jointly correlate different frequency buckets between different ones of the frequency transform streams. The features of the trained feature extraction neural network and the plurality of different angles from the test data set are used to train the classifier neural network to output a probability of angles of arrival of the test audio.

In another embodiment, a hearing system includes: a hearing device, comprising two or more different microphones mounted in a housing of the hearing device; and a second device operably coupled to the hearing device. Respective processors of the hearing device and the second device are operable via instructions to cooperatively perform: obtaining time domain signals from the microphones; and transforming the time domain signals into respective frequency transform streams. The frequency transform streams characterize phase information in the time domain signals. The processors are further operable to determine, from the frequency transform streams, features indicative of directional information of one or more sound sources. The processors are further operable to input the features to a classifier neural network. The classifier network is trained to classify the features into probabilities of angles of arrival of the sound sources. The processors are further operable to, based on the classification of the features, estimate one or more directions of arrival (DOA) of the sound sources and use the estimated DOA to process sound in the hearing device.

The figures and the detailed description below more particularly exemplify illustrative embodiments.

### BRIEF DESCRIPTION OF THE DRAWINGS

The discussion below makes reference to the following figures.
FIG. 1 is an illustration of ear-wearable devices according to an example embodiment;
FIG. 2 is a block diagram showing training and structure of a direction of arrival predictor according to an example embodiment;
FIGS. 3 and 4 are a block diagrams showing arrangement of direction of arrival outputs according to example embodiments;
FIG. 5 is a block diagram of a convolutional neural network using in direction of arrival prediction according to an example embodiment;
FIG. 6 is a block diagram of a recurrent neural network using in direction of arrival prediction according to an example embodiment;
FIG. 7 is a block diagram showing hardware, firmware, and software components of an ear-wearable device according to an example embodiment;
FIGS. 8 a flowchart of a method according to an example embodiment; and
FIG. 9 is a block diagram of a hearing device and system according to an example embodiment.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

Embodiments disclosed herein are directed to an ear-worn or ear-level electronic hearing device. Such a device may include cochlear implants and bone conduction devices, without departing from the scope of this disclosure. The devices depicted in the figures are intended to demonstrate the subject matter, but not in a limited, exhaustive, or exclusive sense. Ear-worn electronic devices (also referred to herein as "hearing aids," "hearing devices," and "ear-wearable devices"), such as hearables (e.g., wearable earphones, ear monitors, and earbuds), hearing aids, hearing instruments, and hearing assistance devices, typically include an enclosure, such as a housing or shell, within which internal components are mounted or disposed.

Embodiments described herein relate to audio enhancement features in an ear-wearable device, such as adaptive echo cancellation (AEC) and directionality. As its name implies, AEC detects undesired echoes in the audio processing stream of a hearing device and cancels out the echoes, e.g., using an adaptive filter. Directionality relates to emphasizing sounds based on the direction the sound arrives relative to the user. Using devices such as directional microphones, directionality can increase the volume of sounds (e.g., increase the amplitude of the signal) coming from in front of the user and deemphasize sounds coming from elsewhere. These features can optimize speech intelligibility, improving the ability of hearing aid users to communicate in challenging listening situations.

Both AEC and directionality may estimate sound source locations relative to the user's ear. This is generally referred to herein as direction of arrival (DOA). A component that uses DOA combines direction estimation with other sound processing algorithms. For example, algorithms that can classify the sound, e.g., speech versus noise, can be used to disregard or emphasize certain sources of sound.

A DOA utility can be used to provide inputs to sound enhancement processes on an ear-wearable device such as AEC and directionality. A DOA utility could also be used to develop new applications to provide greater flexibility to the user. For example, the output from a sound source identifier utility could be used to decrease and/or increase the volume of certain people around the user at a given moment. This could be done via an app that shows the active speakers around the user as detected by the algorithm, and the user may choose (e.g., via a touchscreen input) which speakers to emphasize or ignore. Once a speaker is identified to be emphasized/amplified, for example, the utility may be able to identify the individual (e.g., via voiceprint) and track the speaker as the speaker shifts position and/or as the user turns their head.

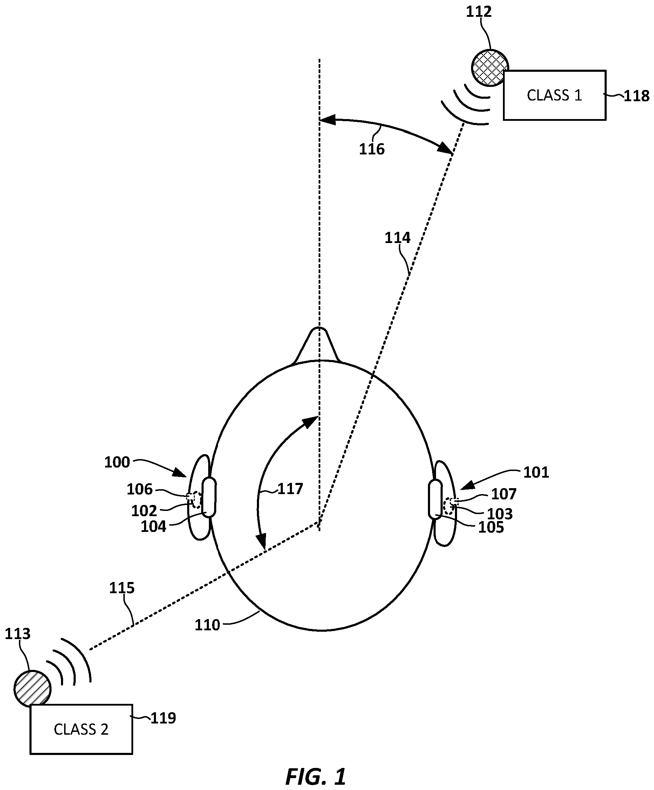

In FIG. 1, a diagram illustrates an example of ear-wearable devices 100, 101 according to an example embodiment, also referred to below as hearing devices. Both left and right ear-wearable devices 100, 101 are shown, each include a respective in-ear portion 102, 103 that fits into the ear canal of a user/wearer 110. The ear-wearable devices 100, 101 may also include respective external portions 104, 105, e.g., worn over the back of the outer ear. The external portions 104, 105 are electrically and/or acoustically coupled to the internal portions 102, 103.

One or both of the in-ear portions 102, 103 and external portions 104, 105 may include an acoustic transducer, referred to herein as a "receiver," "loudspeaker," etc., although could include a bone conduction transducer. If the acoustic transducer is located on the external portions 104, 105, it may be acoustically coupled to the user's ear via a tube and earpiece.

One or both of the in-ear portions 102, 103 and external portions 104, 105 may include an external microphone, as indicated by respective microphones 106, 107. The external portions 104, 105, if included, may each have two microphones, e.g., front and rear microphones (not shown). Generally, an external microphone is situated to pick up sounds originating away from the user 110, as opposed to an internal microphone that is configured to pick up sounds within the ear canal.

Other components of hearing devices 100, 101 not shown in the figure may include a processor (e.g., a digital signal processor or DSP), memory circuitry, power management and charging circuitry, one or more communication devices (e.g., one or more radios, a near-field magnetic induction (NFMI) device), one or more antennas, buttons and/or switches, for example. The hearing devices 100, 101 can incorporate a long-range communication device, such as a Bluetooth^{®} transceiver or other type of radio frequency (RF) transceiver, which can be used to communicate with each other and with external devices as described below.

While FIG. 1 shows one example of a hearing device, often referred to as a hearing aid (HA), the term hearing device of the present disclosure may refer to a wide variety of ear-level electronic devices that can aid a person with or without impaired hearing. This includes devices that can produce processed sound for persons with normal hearing, such as noise addition/cancellation to treat misophonia. This may also include devices used for media playback. Hearing devices include, but are not limited to, behind-the-ear (BTE), in-the-ear (ITE), in-the-canal (ITC), invisible-in-canal (IIC), receiver-in-canal (RIC), receiver-in-the-ear (RITE) or completely-in-the-canal (CIC) type hearing devices or some combination of the above. Throughout this disclosure, reference is made to a "hearing device" or "ear-wearable device," which is understood to refer to a system comprising a single left ear device, a single right ear device, or a combination of a left ear device and a right ear device.

One or both of the hearing devices 100, 101 are equipped with a DOA utility as described herein. As indicated in FIG. 1, sound sources 112, 113 can emit sound from different directions and distances from the user 110, as indicated by dotted lines 114, 115, and angles 116, 117. The device can at least estimate the angles 116, 117 to a reasonable degree of accuracy, and optionally the distances 114, 115. As indicated by blocks 118, 119, the device may also be able to categorize the sound, which are labeled as classes here, e.g., speech, noise, animal sounds, etc. In other cases, the classifier can detect a particular speaker or other sound source and remember characteristics of the speaker for at least one session, and possibly longer. Note that while the angles 116, 117 are defined relative to a center of the user's head, the angles may be defined relative to any reference point, e.g., a point on the hearing devices 100, 101.

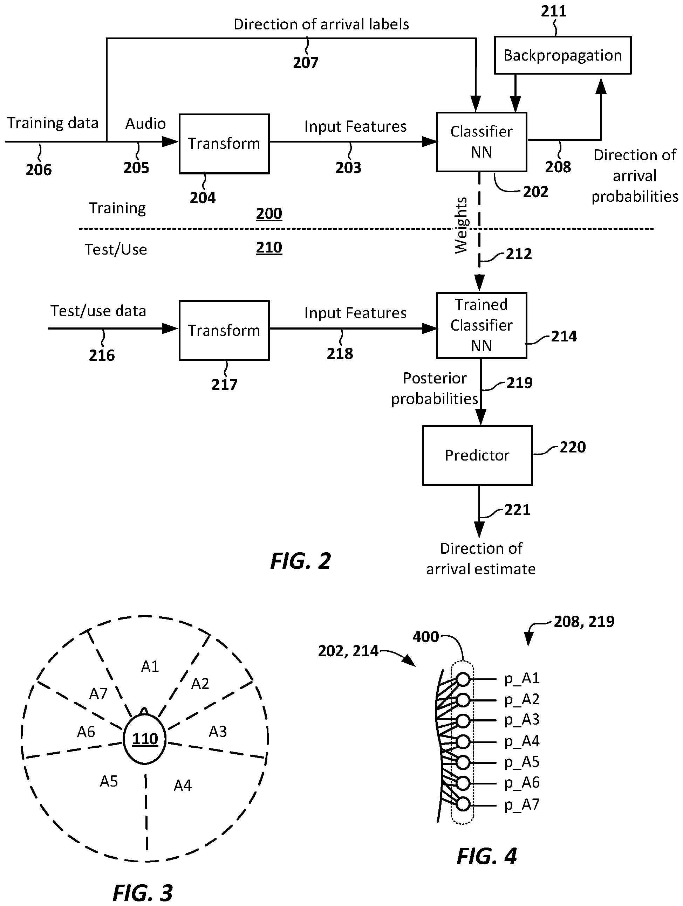

In FIG. 2, a block diagram shows aspects of a DOA estimation utility according to an example embodiment. The figure is divided into two sections 200, 210. Section 200 shows aspects related to training of a neural network (NN) 202 as a direction of arrival (DOA) classifier. Generally, a DOA classifier takes input features 203 extracted from two or more audio signals via transform block 204, e.g., using a discrete Fourier transform (DFT) such as a short-time Fourier transform (STFT). The transform block 204 receives audio input signals 205 (e.g., digital audio streams from two more microphones) and converts the audio signals 205 from time domain to frequency domain using a Fourier transform. The frequency domain data stream may be post-processed by the block 204 before being output as the input features 203 to the classifier neural network 202. The transform block 204 extracts at least phase information from the audio signals 205, and may also extract magnitude in some cases. This phase information, referred to a phase map, can be used as the features output from the transform block 204.

The post-processing by the block 204 may include combining different frequency buckets that are known to correlate to directional information. For example, a sound source at a particular angle may be known to induce distinct phase changes in different frequency buckets of different microphones. Thus the combination of responses in those buckets may be combined into a distinct feature. These features may be learned a priori using a feature extraction neural network to extract features that jointly correlate different frequency buckets of the transform streams.

As seen in the top half of the figure, the audio input signals 205 are a subset of training data 206. The training data 206 also includes labels 207 that indicate one or more directions of arrival for the as a stream that matches the audio input signals 205. The labels 207 may be obtained by manually labeling an audio stream based on knowledge of the source. In other cases, the labels 207 may be part of a program in which various sound sources (e.g., loudspeakers) that automatically play sounds at different locations according to a program schedule, such that the locations are known from the program schedule.

During training, the classifier neural network 202 makes estimates 208 of directions of arrival, which are fed back into a learning algorithm, herein indicated by backpropagation block 211. As shown here, the estimates 208 are probabilities that sound source is located within an angular range. The probabilities may be defined is shown in the diagram of FIG. 3, which shows an arbitrary demarcation of direction of arrival into seven angular ranges A1-A7 of the listening space. Note that the ranges A1-A7 are not equal in size but are symmetric with a line of symmetry front-to-back through the head of the user 110. Other demarcations may be used, with more or fewer divisions, equal sized angular ranges, non-symmetric distribution about the user, etc.

In some embodiments a left ear or right ear hearing device respectively makes only a left-side or right-side DOA prediction for different hemispheres on a side of a user's head in which the hearing device is installed. For example, such an arrangement may involve the left-side device making predictions for only angular ranges A5-A7 and the right-side device making predictions only for angular ranges A2-A4. The range A1 may be split between the left and right sides, or both devices may make independent predictions that generally cover the whole front region A1.

This direction of arrival classification scheme shown in FIG. 3 doesn't make any estimates of the height of the sound source (in a direction normal to the page in FIG. 3). Given enough microphones and machine learning models, estimates of height maybe detected as well, e.g., representing the listening space into cylindrical surfaces or spheres. Such a multidimensional DOA space may, for example, be able to differentiate between and adult and a child standing close to one another due to the different heights of the speakers.

As seen in FIG. 4, the trained neural network 214 has an output layer 400 that can provide probabilities p_A1-p_A7 that a sound source is detected in respective angular ranges A1-A7. The probabilities can be independent and so each of p_A1-p_A7 can be scaled to be between zero and one, for example. Generally, the system using the trained neural network 214 may use a binary indicator that a source is within a region, e.g., 0=no_sound source and 1=sound_source. A scheme to select the binary indicator from the probability (e.g., thresholding around 50%) will result in a 7-bit binary value that can represent all of the 2^7 DOA states detectable by the ear-wearable device. Other output encoding schemes can be used and this example is not meant to be limiting.

In reference again to FIG. 2, the training 200 involves performing a number of iterations that involve determining an error between the estimates 208 and the labels 207, e.g., mean-squared error (MSE). Based on size and direction of the errors at each iteration, weights and biases of the classifier neural network 202 are adjusted in order to reduce the error (e.g., using gradient descent). This adjustment of the weights and biases is performed iteratively on the training data 206 until the error reaches a threshold (or some other criterion is met). At this point, the classifier neural network 202 is trained, and its weights 212 after training can be used in a trained neural network 214.

The trained neural network 214 is generally the same as the classifier neural network 202 it terms of structure, activation functions, and the like. This network is in the lower part of the diagram to indicate that trained weights are used to test and/or use the trained network 214. Testing involves evaluating a set of validation data, similar to the training data 206 but different enough from the training data 214 that it can detect of the training model over-fitted the training data. If the trained neural network 214 performs poorly with validation data, it may be retrained and/or have its parameters adjusted (e.g., activation functions, number of layers, format of input data 203, etc.) and the cycle repeats as needed. If the trained neural network 214 performs acceptably in validation, it can be deployed in an ear-wearable device, e.g., by transferring the neural network weights to the device memory as well as data describing the structure of the neural network. In the ear-wearable device, audio data 216 (e.g., from microphones on the device) is processed through a transform block 217 that is the same as or compatible with the transform block 204 used in testing.

The transform block 217 provides input features 218 for the trained classifier neural network 214, which outputs posterior probabilities 219 as described elsewhere herein. The probabilities 219 may be further processed by a predictor block 220, which examines the time series of the neural network output to look at a range of predictions and combine them over a period of time to provide a final direction of arrival estimate 221. The estimate 221 may have a different format than the probabilities output from the neural network. For example, the seven probabilities 219 shown in FIG. 4 may be simplified to less than seven regions in the estimate 221.

A prototype neural network was able to produce DOA probabilities at the rate of around once every 10ms. Thus, the predictor block 220 can work with a large amount of samples for statistical analysis, smoothing, and the like. This can help to stabilize the outputs of the trained neural network 214 while still being able to react and adapt to changes, e.g., speaker is moving from one angle to another, user turns their head, etc.

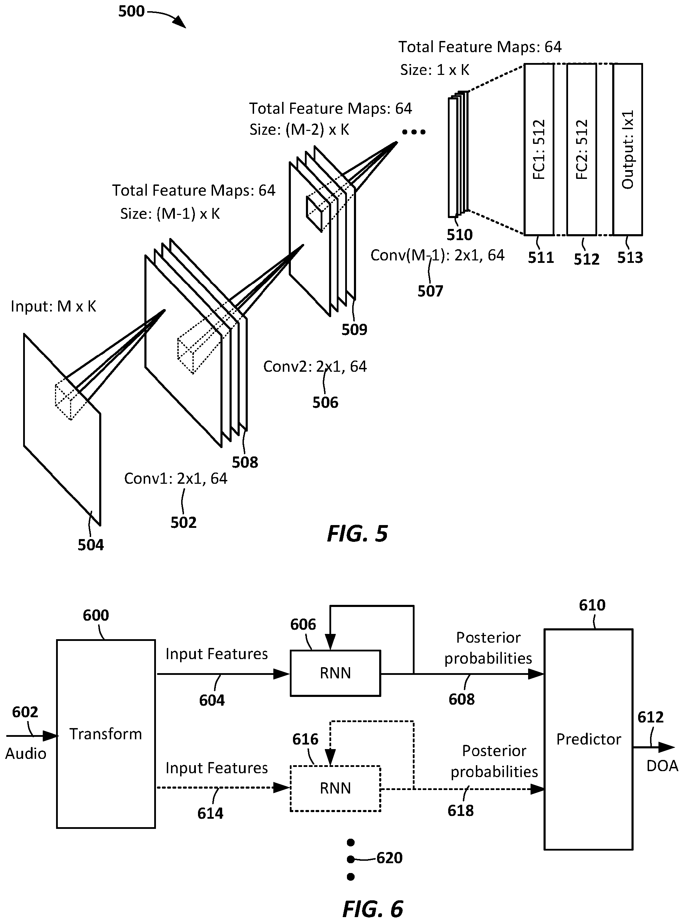

In FIG. 5, a diagram illustrates a convolutional neural network (CNN) 500 that can be used as a DOA classifier according to an example embodiment. The variable M refers to a number of microphones, where M > 1. The variable K refers to a total number of frequency bins extracted by in the transform block 217. In one currently implemented embodiment, the transform block provides 257 bins/features. The variable I refers to the number of classes (angles or angle ranges) that are output from the CNN 500. In one implementation, the CNN output is mapped to thirteen different angles.

In one embodiment, the CNN 500 uses binary, cross-entropy as a loss function and sigmoid activation functions. The CNN 500 performs M-1 convolutions, which includes at least convolution 502 over the M x K input feature matrix 504. Other convolutions 506, 507 are performed for M > 2, employing intermediate convolutional layers 508, 509. The convolutions use kernels/filters of size 2 × 1 to learn the phase correlations between neighboring microphones at each frequency sub-band. The final convolutional layer 510 is input to two fully connected layers 511, 512, the outputs of which are combined into an output layer 513. More details of this type of CNN can be found in "Multi-Speaker DOA Estimation Using Deep Convolutional Networks Trained with Noise Signals," by Soumitro Chakrabarty, IEEE Journal of Selected Topics in Signal Processing, Vol. 13, No. 1, March 2019.

While the CNN implementation has been found to be effective for DOA estimation, the hardware for many ear-wearable devices may not have sufficient resources (e.g., memory, processor capability) to implement a CNN at that scale. Some devices may have custom neural network circuitry, however these are often configured as recurrent neural networks (RNNs) and not CNNs. Therefore, in some embodiments the classifier may be implemented as an RNN.

In FIG. 6, a diagram shows a DOA classifier using one or more RNNs according to an example embodiment. A transformer 600 transforms audio signals 602 (e.g., digitized bit streams, weighted-overlap-add frames) from two or more microphones into at least one set of input features 604 that describes the transforms (e.g., phase as a function of frequency) for the multiple microphones. The input features 604 are fed into an RNN 606 which is trained to estimate a direction of arrival based on the weights of the trained recurrent unit, which may be a gated recurrent unit (GRU) or a long short term memory (LSTM) unit. The RNN 606 outputs probabilities 608, e.g., a 1 x I vector with a probability for each direction as previously described. A predictor 610 may further process the probabilities to obtain a DOA estimate 612.

The effectiveness of the RNN 606 may depend on how the input features 604 are combined and formatted. In some embodiments, a second RNN 616 may be used that takes second features 614 as input and provides second probabilities 618. The composition of the features 604, 614 may vary based on selected frequency bins, dimensionality of the feature matrices, different post-processing, etc. The different probabilities 608, 618 may apply to the same angular regions, or may apply to separate regions, e.g., one set of probabilities predicts sound origin directions within a front hemisphere, another set of probabilities predicts sound origin directions within a back hemisphere, etc. As indicated by the ellipsis 620, this can be extended to include additional RNNs and transformation/encoding schemes.

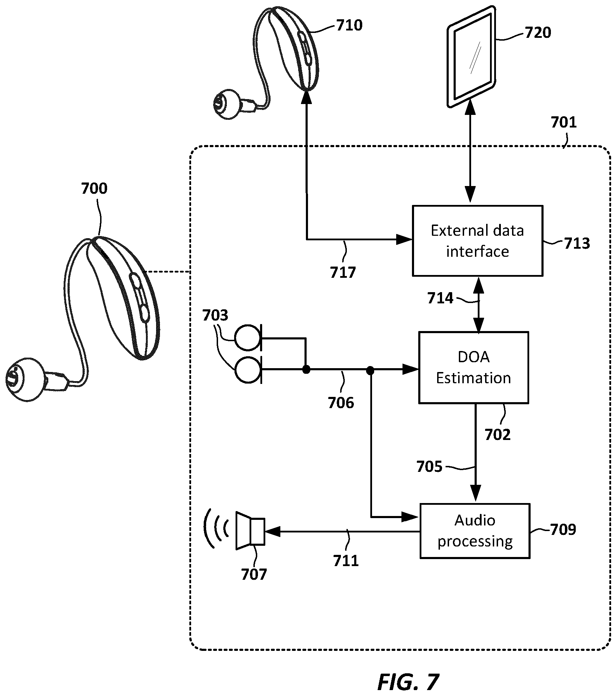

In FIG. 7, a block diagram shows hardware, firmware, and software components 701 operational on an ear-wearable device 700 according to an example embodiment. The hardware components include two or more microphones 703 and a receiver 707. A DOA estimator 702 monitors signals 706 from the microphones 703 and estimates the location of one or more sound sources, e.g., measured from an angle within a reference frame of the ear-wearable device 700. The output of the DOA estimator 702 includes estimates 705 (e.g., probabilities) that are provided to an audio processing circuit 709.

The audio processing circuit 709 provides an output signal 711 to the receiver 707. For a hearing aid application, the output signal 711 may include ambient sound sensed via the microphones 703 and further processed, e.g., amplified and enhanced to compensate for hearing loss. In some applications, the output signal 711 may include different or additional audio sources, such as indicator tones, digital sound (e.g., music, audio book) and other sound processing effects or components (e.g., spectral shaping to compensate for hearing loss, active noise cancellation).

The audio processing 709 may utilize the DOA estimator 702 as a system service, e.g., the DOA estimates 705 may be available by an application program interface or library that allows one or more processors to monitor DOA state of the device 700. This may be combined with or used by other services, e.g., speech detection, voice identification, echo cancellation, etc. Generally, the DOA estimator 702 uses a machine learning model as described above together with an audio pre-processor (e.g., DFT transformer block).

As noted above, the capabilities of a DOA estimator can increase with an increase in the number of microphones providing input. As ear-wearable devices are often deployed in pairs, it is possible to use the microphones of two ear-wearable devices. Thus, as shown in FIG. 7, the ear-wearable device 700 includes an external data interface 713 that provides the ability to communicate with a second ear-wearable device 710. This enables providing a DOA determined by and usable by both devices 700, 710, hereinafter referred to as a cooperative DOA estimation. For purposes of the following discussion, the term "local" is meant to describe a calculation and/or determination that is used by and for a single device, wherein "global" is meant to describe a calculation and/or determination that is used by and made for two or more devices.

The cooperative DOA estimation can be implemented in a primary/secondary mode where one of the ear-devices controls the processing system-wide (e.g., one device makes the final decision on a global DOA for all devices) or can be implemented in a peer-to-peer mode (e.g., each device makes their own local estimate of DOA based on locally available data and/or remotely received data). Generally, the external data interface 713 (and a corresponding interface on device 710) may be low-power, low-bandwidth such that DOA-specific data 717, 714 exchanged between devices 700, 710 may be in a reduced form.

For example, the devices 700, 710 could transmit input features (e.g., features 218 in FIG. 2) from one to another and/or vice versa. The feature data can be used to compute the DOA, e.g., processed through a locally operating machine learning model together with local data to make a local or global combined DOA estimate. The size of the transmitted features could be reduced to facilitate a low-bandwidth connection by reducing, among other things, time interval and/or number of frequency buckets in the remotely transmitted streams. Differences in timing and content between the local feature stream and transmitted feature stream can be handled as known in the art, e.g., using a Kalman filter.

In another embodiment, the devices 700, 710 could transmit their local DOA predications (e.g., probabilities 219 and/or estimates 221 as shown in FIG. 2) from one to another and/or vice versa. These can be combined into a local estimate in peer-to-peer mode, or a global estimate determined by one of the devices 700, 710 or a third device such as mobile device 720 (e.g., mobile phone, tablet, smart watch, portable computer). The DOA estimate data may be compact enough that it does not need to be reduced in size, although a reduction in time interval may still yield power savings in some embodiments.

Note that there may be situations where the hearing devices 700, 710 are operable to switch cooperative DOA in and out of use, e.g., when DOA estimates are not used, where lower-accuracy DOA estimates are acceptable, low-power mode is selected, etc. In a non-cooperative mode, each device may estimate DOA within a hemisphere on one side of a user's head in which the hearing device is installed, e.g., making left-side-only or right-side-only DOA predictions.

If the cooperative DOA estimation uses transmitted features to make combined estimations, the machine learning model (e.g., trained classifier neural network 214) may operate in a different mode when cooperative DOA is switched on or off. This may be achieved, for example, by changing one or both of weights and structure of the classifier neural network. If the cooperative DOA estimation uses transmitted probabilities and/or estimates to make combined estimations, then the algorithm used in producing the final DOA estimation can be adjusted appropriately when cooperative DOA is switched on or off.

The mobile device 720 in FIG. 7 may also be involved in some aspects of DOA estimation. For example, the mobile device 720 may have its own microphone that could gather additional audio cues to estimate DOA, presuming that an orientation (e.g., distance and angle) relative to one or both of the ear-wearable devices 700, 710 can be established (e.g., measured, manually input). Examples of a mobile device 720 that could form and/or extend a microphone array include one or more microphones incorporated into the frame of a pair of glasses, or into any other head-worn or body-worn item, such as a head band, necklace, hat, etc. In other embodiments, the mobile device 720 may act as a controller or peer device in cooperative DOA estimation. For example, one or both of the ear-wearable devices 700, 710 could send feature data to the mobile device 720, which uses a neural network (e.g., CNN 500 as in FIG. 5) to produce local global DOA estimations. The DOA estimates are then sent back to the devices 700, 710 to use in local sound enhancement pro.

In other embodiments, the mobile device 720 may include a program operable to receive data indicating the estimated DOA (or features as described above) from at least one of the hearing devices 700, 710 and graphically represent the data on a user interface of the mobile device. For example, the sound sources may be selectable elements such as user interface controls (e.g., buttons, selection boxes, hyperlinks) that identify relative location of the sound sources (e.g., similar to representation in FIG. 1). In response to a user selection of one of the selectable elements, a message is sent to the at least one hearing device 700, 710 indicating the user selection, In response to the at least one hearing device 700, 710 receiving the message, and the device uses the data indicating the one or more directions to process sound, e.g., emphasizing a direction associated with the user selection.

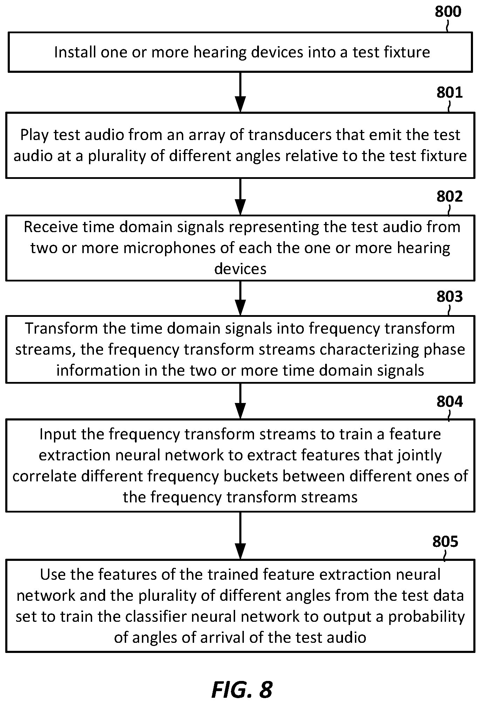

In FIG. 8, a flowchart shows a method of training a classifier neural network for direction of arrival (DOA) estimation according to an example embodiment. The method involves installing 800 one or more hearing devices into a test fixture. Generally, the test fixture will simulate a human user (e.g., dummy head), and multiple fixtures may be used to simulate different conditions such as user size, sound affecting objects such as hair, hats, etc. Test audio is played 801 from an array of transducers (e.g., loudspeakers) that emit the test audio at a plurality of different angles relative to the test fixture. The test audio is associated with the plurality of different angles in a test data set, which will facilitate supervised learning of the classifier neural network. The test audio may contain any combination of noise, speech, and common background noises.

During the testing, time domain signals are received 802 that represent the test audio from two or more microphones of each the one or more hearing devices. This test audio may be recorded for further processing, as well as being associated with (labeled with) directional information stored in the test set. The time domain signals are transformed 803 into frequency transform streams that characterize phase information in the two or more time domain signals. These frequency transform streams may be stored and labeled together with or instead of the time domain information.

The frequency transform streams are input 804 to train a feature extraction neural network to extract features that jointly correlate different frequency buckets between different ones of the frequency transform streams. This feature extraction neural network may only be needed for training purposes. In a deployed ear-wearable device, the features may be extracted and/or compiled by a transformer block as described elsewhere herein, e.g., using an algorithm that selects and optionally combines phase values from different buckets. In other embodiments, the feature extraction neural network may also be deployed on the ear-wearable device. The features of the trained feature extraction neural network and the plurality of different angles from the test data set are used 805 to train the classifier neural network to output a probability of angles of arrival of the test audio.

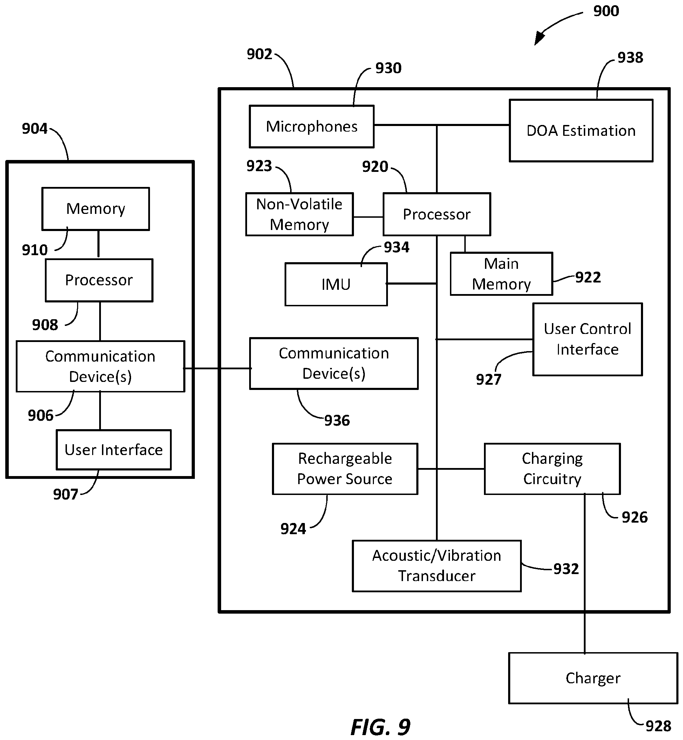

In FIG. 9, a block diagram illustrates a system and ear-wearable/hearing device 900 in accordance with any of the embodiments disclosed herein. The hearing device 900 includes a housing 902 configured to be worn in, on, or about an ear of a wearer. The hearing device 900 shown in FIG. 9 can represent a single hearing device configured for monaural or single-ear operation or one of a pair of hearing devices configured for binaural or dual-ear operation. Where two devices are used, they may be functionally equivalent, e.g., perform the same operations as least as it relates to DOA processing. Functionally equivalent devices may still operate differently, e.g., having different physical form for left/right sides, having different ear canal fittings, having different sound processing settings to deal with ear-specific (left or right) pathologies, etc.

The hearing device 900 shown in FIG. 9 includes a housing 902 within or on which various components are situated or supported. The housing 902 can be configured for deployment on a wearer's ear (e.g., a behind-the-ear device housing), within an ear canal of the wearer's ear (e.g., an in-the-ear, in-the-canal, invisible-in-canal, or completely-in-the-canal device housing) or both on and in a wearer's ear (e.g., a receiver-in-canal or receiver-in-the-ear device housing).

The hearing device 900 includes a processor 920 operatively coupled to a main memory 922 and a non-volatile memory 923. The processor 920 can be implemented as one or more of a multi-core processor, a digital signal processor (DSP), a microprocessor, a programmable controller, a general-purpose computer, a special-purpose computer, a hardware controller, a software controller, a combined hardware and software device, such as a programmable logic controller, and a programmable logic device (e.g., FPGA, ASIC). The processor 920 can include or be operatively coupled to main memory 922, such as RAM (e.g., DRAM, SRAM). The processor 920 can include or be operatively coupled to non-volatile (persistent) memory 923, such as ROM, EPROM, EEPROM or flash memory. As will be described in detail hereinbelow, the non-volatile memory 923 is configured to store instructions (e.g., module 938) that detect direction of arrival of selected sound sources (e.g., speech).

The hearing device 900 includes an audio processing facility (also referred to as an audio processor circuit) operably coupled to, or incorporating, the processor 920. The audio processing facility includes audio signal processing circuitry (e.g., analog front-end, analog-to-digital converter, digital-to-analog converter, DSP, and various analog and digital filters), a microphone arrangement 930, and an acoustic/vibration transducer 932 (e.g., loudspeaker, receiver, bone conduction transducer, motor actuator). The microphone arrangement 930 can include two or more discrete microphones or a microphone array(s) (e.g., configured for microphone array beamforming). Each of the microphones of the microphone arrangement 930 can be situated at different locations of the housing 902. It is understood that the term microphone used herein can refer to a single microphone or multiple microphones unless specified otherwise.

The acoustic transducer 932 produces amplified sound inside of the ear canal. For purposes of this disclosure, "amplified" sound refers to electronically reproduced sound, which typically involves the use of an amplifier to drive the acoustic transducer 932. Amplified sound does not necessarily imply an increase in sound pressure level of ambient sounds relative to what would be experienced with the device removed. In some cases, the amplified sound may result in an overall sound pressure level similar to ambient, e.g., where an equalization curve is applied to affect a small frequency range. In other cases, amplified sound can reduce the sound pressure level in the ear, e.g., via active noise cancellation.

The hearing device 900 may also include a user interface with a user control interface 927 operatively coupled to the processor 920. The user control interface 927 is configured to receive an input from the wearer of the hearing device 900. The input from the wearer can be any type of user input, such as a touch input, a gesture input, or a voice input. The user control interface 927 may be configured to receive an input from the wearer of the hearing device 900.

The hearing device 900 also includes a DOA estimation module 938 operably coupled to the processor 920. The module 938 can be implemented in software, hardware (e.g., specialized neural network logic circuitry, general purpose processor), or a combination of hardware and software. During operation of the hearing device 900, the module 938 can be used to analyze audio signals generated from the microphone arrangement 930 and generate an estimate of a direction of arrival of one or more sound sources, e.g., persons speaking in the local vicinity. These estimations can be used by various other operational modules operable on the processor such as directionality and echo cancellation (not shown).

The hearing device may include other sensors, such as an IMU 934 to determine an operating context of the hearing device 900, e.g., in-ear, out-of-ear, etc., which can affect how the sound is analyzed and processed. The IMU 934 can also be used to assist in the DOA estimation 938, such as determining a changing DOA reference frame with the user's head is turning.

The hearing device 900 can include one or more communication devices 936. For example, the one or more communication devices 936 can include one or more radios coupled to one or more antenna arrangements that conform to an IEEE 902.9 (e.g., Wi-Fi^{®}) or Bluetooth^{®} (e.g., BLE, Bluetooth^{®} 4.2, 5.0, 5.1, 5.2 or later) specification, for example. In addition, or alternatively, the hearing device 900 can include a near-field magnetic induction (NFMI) sensor (e.g., an NFMI transceiver coupled to a magnetic antenna) for effecting short-range communications (e.g., ear-to-ear communications, ear-to-kiosk communications). The communications device 936 may also include wired communications, e.g., universal serial bus (USB) and the like.

The communication device 936 is operable to allow the hearing device 900 to communicate with an external computing device 904, e.g., a mobile device such as smartphone, laptop computer, etc. The external computing device 904 may also include a device usable by a clinician in a clinical setting, such as a desktop computer, test apparatus, etc. The external computing device 904 includes a communications device 906 that is compatible with the communications device 936 for point-to-point or network communications. The external computing device 904 includes its own processor 908 and memory 910, the latter which may encompass both volatile and non-volatile memory. A user interface 907 facilitates interactions between the external computing device 904 and the hearing device 900, including access to DOA estimates from module 938. The external computing device 904 may perform some functions described herein associated with the hearing device 900, such as DOA estimation, directing directionality decisions based on user inputs, etc.

The hearing device 900 also includes a power source, which can be a conventional battery, a rechargeable battery (e.g., a lithium-ion battery), or a power source comprising a supercapacitor. In the embodiment shown in FIG. 9, the hearing device 900 includes a rechargeable power source 924 which is operably coupled to power management circuitry for supplying power to various components of the hearing device 900. The rechargeable power source 924 is coupled to charging circuity 926. The charging circuitry 926 is electrically coupled to charging contacts on the housing 902 which are configured to electrically couple to corresponding charging contacts of a charger 928 when the hearing device 900 is placed in the charger.

This document discloses numerous example embodiments, including but not limited to the following:
Example 1 is a hearing system, comprising: a first hearing device, comprising: two or more different microphones mounted in a housing of the first hearing device; and a processor operably coupled to the two or more microphones, the processor operable via instructions to: obtain time domain signals from the microphones; transform the time domain signals into respective frequency transform streams, the frequency transform streams characterizing phase information in the time domain signals; determine, from the frequency transform streams, features indicative of directional information of one or more sound sources; input the features to a classifier neural network, the classifier network trained to classify the features into probabilities of angles of arrival of the sound sources; based on the classification of the features, estimate one or more directions of arrival (DOA) of the sound sources; and use the estimated DOA to process sound in the first hearing device.
Example 2 includes the hearing system of example 1, wherein the first hearing device further comprises: a communication interface operable to communicate with a mobile device; and a program operable on the mobile device to perform: receiving data indicating the estimated DOA; graphically representing the data on a user interface of the mobile device as selectable elements identifying a relative location of the sound sources; and in response to a user selection of one of the selectable elements, sending a message to the first hearing device indicating the user selection; and wherein the first hearing device receives the message, and wherein using the data indicating the one or more directions to process sound comprises emphasizing a selected direction associated with the user selection.
Example 3 includes the hearing system of example 1 or 2, wherein using the estimated DOA comprises increasing or decreasing amplitude of selected ones of the sound sources. Example 4 includes the hearing system of any one of examples 1-3, wherein using the estimated DOA comprises performing adaptive echo cancellation. Example 5 includes the hearing system of any one of examples 1-4, wherein angles in the estimated DOA are within a hemisphere on a side of a user's head in which the first hearing device is installed. Example 6 includes the hearing system of any one of examples 1-5, wherein the classifier neural network comprises a recurrent neural network.
Example 7 includes the hearing system of any one of examples 1-6, further comprising a second hearing device functionally equivalent to the first hearing device as set forth in example 1, the first and second hearing devices comprising respective first and second data interfaces for communication with each other, wherein the processor of the first hearing device is operable to: receive from the second hearing device a received data stream comprising a second estimated DOA or other second data usable to compute the second estimated DOA; create a combined estimated DOA using the received data stream; and use the combined estimated DOA to process the sound in the first hearing device. Example 8 includes the hearing system of example 7, wherein the other second data comprises second features from a second frequency transform streams of the second hearing device. Example 9 includes the hearing system of example 8, wherein the second features are reduced in size before being sent via the received data stream. Example 10 includes the hearing system of example 9, wherein reducing the size of the second features comprises at least one of a reduction in time interval and a reduction in number of frequency buckets.
Example 11 includes the hearing system of any one of examples 7-10, further comprising transmitting to the second hearing device a transmitted data stream comprising the estimated DOA or other local data usable to compute the estimated DOA, the second hearing device creating a second combined estimated DOA using the transmitted data stream and using the second combined estimated DOA to process second sound in the second hearing device.
Example 12 is a method of training a classifier neural network for direction of arrival (DOA) estimation. The method comprises: installing one or more hearing devices into a test fixture; playing test audio from an array of transducers that emit the test audio at a plurality of different angles relative to the test fixture, the test audio associated with the plurality of different angles in a test data set; receiving time domain signals representing the test audio from two or more microphones of each the one or more hearing devices; transforming the time domain signals into frequency transform streams, the frequency transform streams characterizing phase information in the two or more time domain signals; inputting the frequency transform streams to train a feature extraction neural network to extract features that jointly correlate different frequency buckets between different ones of the frequency transform streams; and using the features of the trained feature extraction neural network and the plurality of different angles from the test data set to train the classifier neural network to output a probability of angles of arrival of the test audio.
Example 13 includes the method of example 12, further comprising using the trained feature extraction neural network and the trained classifier neural network to process sound in a fielded hearing device. Example 14 includes the method of example 12 or 13, wherein using the trained classifier neural network to process sound comprises using the trained classifier neural network for adaptive echo cancellation. Example 15 includes the method of any one of examples 12-14, wherein the angles of arrival are within a hemisphere on a side of a user's head in which the hearing device is installed. Example 16 includes the method of any one of examples 12-15, wherein the angles of arrival include three-dimensional angles indicative of height relative to a user's head. Example 17 includes the method of any one of examples 1-162, wherein the feature extraction neural network comprises a recurrent neural network.
Example 18 includes the method of any one of examples 12-17, wherein the one or more hearing devices comprises two hearing devices, and wherein the frequency transform streams from the two hearing devices train the feature extraction neural network to extract features that jointly correlate different frequency buckets between different ones of the frequency transform streams of the two hearing devices. Example 19 includes the method of example 18, wherein the angles of arrival are within two hemispheres on two sides of a user's head in which the two hearing devices are installed.
Example 20 is a hearing system, comprising: a hearing device, comprising two or more different microphones mounted in a housing of the hearing device; and a second device operably coupled to the hearing device, wherein respective processors of the hearing device and the second device are operable via instructions to cooperatively perform: obtaining time domain signals from the microphones; transforming the time domain signals into respective frequency transform streams, the frequency transform streams characterizing phase information in the time domain signals; determining, from the frequency transform streams, features indicative of directional information of one or more sound sources; inputting the features to a classifier neural network, the classifier network trained to classify the features into probabilities of angles of arrival of the sound sources; based on the classification of the features, estimating one or more directions of arrival (DOA) of the sound sources; and using the estimated DOA to process sound in the hearing device. Example 21 includes the hearing system of example 20, wherein the second device comprises a second hearing device. Example 22 includes the hearing system of example 20, wherein the second device comprises a mobile device.

Although reference is made herein to the accompanying set of drawings that form part of this disclosure, one of at least ordinary skill in the art will appreciate that various adaptations and modifications of the embodiments described herein are within, or do not depart from, the scope of this disclosure. For example, aspects of the embodiments described herein may be combined in a variety of ways with each other. Therefore, it is to be understood that, within the scope of the appended claims, the claimed invention may be practiced other than as explicitly described herein.

All references and publications cited herein are expressly incorporated herein by reference in their entirety into this disclosure, except to the extent they may directly contradict this disclosure. Unless otherwise indicated, all numbers expressing feature sizes, amounts, and physical properties used in the specification and claims may be understood as being modified either by the term "exactly" or "about." Accordingly, unless indicated to the contrary, the numerical parameters set forth in the foregoing specification and attached claims are approximations that can vary depending upon the desired properties sought to be obtained by those skilled in the art utilizing the teachings disclosed herein or, for example, within typical ranges of experimental error.

The recitation of numerical ranges by endpoints includes all numbers subsumed within that range (e.g., 1 to 5 includes 1, 1.5, 2, 2.75, 3, 3.80, 4, and 5) and any range within that range. Herein, the terms "up to" or "no greater than" a number (e.g., up to 50) includes the number (e.g., 50), and the term "no less than" a number (e.g., no less than 5) includes the number (e.g., 5).

The terms "coupled" or "connected" refer to elements being attached to each other either directly (in direct contact with each other) or indirectly (having one or more elements between and attaching the two elements). Either term may be modified by "operatively" and "operably," which may be used interchangeably, to describe that the coupling or connection is configured to allow the components to interact to carry out at least some functionality (for example, a radio chip may be operably coupled to an antenna element to provide a radio frequency electric signal for wireless communication).

Terms related to orientation, such as "top," "bottom," "side," and "end," are used to describe relative positions of components and are not meant to limit the orientation of the embodiments contemplated. For example, an embodiment described as having a "top" and "bottom" also encompasses embodiments thereof rotated in various directions unless the content clearly dictates otherwise.

Reference to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout are not necessarily referring to the same embodiment of the disclosure. Furthermore, the particular features, configurations, compositions, or characteristics may be combined in any suitable manner in one or more embodiments.

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

As used herein, "have," "having," "include," "including," "comprise," "comprising" or the like are used in their open-ended sense, and generally mean "including, but not limited to." It will be understood that "consisting essentially of," "consisting of," and the like are subsumed in "comprising," and the like. The term "and/or" means one or all of the listed elements or a combination of at least two of the listed elements.

The phrases "at least one of," "comprises at least one of," and "one or more of" followed by a list refers to any one of the items in the list and any combination of two or more items in the list.

Further aspects of the description are detailed in the following clauses:
1. A hearing system, comprising:
   a first hearing device, comprising:
   two or more different microphones mounted in a housing of the first hearing device; and
   a processor operably coupled to the two or more microphones, the processor operable via instructions to:
      obtain time domain signals from the microphones;
      transform the time domain signals into respective frequency transform streams, the frequency transform streams characterizing phase information in the time domain signals;
      determine, from the frequency transform streams, features indicative of directional information of one or more sound sources;
      input the features to a classifier neural network, the classifier network trained to classify the features into probabilities of angles of arrival of the sound sources;
      based on the classification of the features, estimate one or more directions of arrival (DOA) of the sound sources; and
      use the estimated DOA to process sound in the first hearing device.
2. The hearing system of clause 1, wherein the first hearing device further comprises:
   a communication interface operable to communicate with a mobile device; and
   a program operable on the mobile device to perform:
      receiving data indicating the estimated DOA;
      graphically representing the data on a user interface of the mobile device as selectable elements identifying a relative location of the sound sources; and
      in response to a user selection of one of the selectable elements, sending a message to the first hearing device indicating the user selection; and
   wherein the first hearing device receives the message, and wherein using the data indicating the one or more directions to process sound comprises emphasizing a selected direction associated with the user selection.
3. The hearing system of clause 1, wherein using the estimated DOA comprises increasing or decreasing amplitude of selected ones of the sound sources.
4. The hearing system of clause 1, wherein using the estimated DOA comprises performing adaptive echo cancellation.
5. The hearing system of clause 1, wherein angles in the estimated DOA are within a hemisphere on a side of a user's head in which the first hearing device is installed.
6. The hearing system of clause 1, wherein the classifier neural network comprises a recurrent neural network.
7. The hearing system of clause 1, further comprising a second hearing device functionally equivalent to the first hearing device as set forth in claim 1, the first and second hearing devices comprising respective first and second data interfaces for communication with each other, wherein the processor of the first hearing device is operable to:
   receive from the second hearing device a received data stream comprising a second estimated DOA or other second data usable to compute the second estimated DOA;
   create a combined estimated DOA using the received data stream; and
   use the combined estimated DOA to process the sound in the first hearing device.
8. The hearing system of clause 7, wherein the other second data comprises second features from a second frequency transform streams of the second hearing device.
9. The hearing system of clause 8, wherein the second features are reduced in size before being sent via the received data stream.
10. The hearing system of clause 9, wherein reducing the size of the second features comprises at least one of a reduction in time interval and a reduction in number of frequency buckets.
11. The hearing system of clause 7, further comprising transmitting to the second hearing device a transmitted data stream comprising the estimated DOA or other local data usable to compute the estimated DOA, the second hearing device creating a second combined estimated DOA using the transmitted data stream and using the second combined estimated DOA to process second sound in the second hearing device.
12. A method of training a classifier neural network for direction of arrival (DOA) estimation, the method comprising:
   installing one or more hearing devices into a test fixture;
   playing test audio from an array of transducers that emit the test audio at a plurality of different angles relative to the test fixture, the test audio associated with the plurality of different angles in a test data set;
   receiving time domain signals representing the test audio from two or more microphones of each the one or more hearing devices;
   transforming the time domain signals into frequency transform streams, the frequency transform streams characterizing phase information in the two or more time domain signals;
   inputting the frequency transform streams to train a feature extraction neural network to extract features that jointly correlate different frequency buckets between different ones of the frequency transform streams; and
   using the features of the trained feature extraction neural network and the plurality of different angles from the test data set to train the classifier neural network to output a probability of angles of arrival of the test audio.
13. The method of clause 12, further comprising using the trained feature extraction neural network and the trained classifier neural network to process sound in a fielded hearing device.
14. The method of clause 12, wherein using the trained classifier neural network to process sound comprises using the trained classifier neural network for adaptive echo cancellation.
15. The method of clause 12, wherein the angles of arrival are within a hemisphere on a side of a user's head in which the hearing device is installed.
16. The method of clause 12, wherein the angles of arrival include three-dimensional angles indicative of height relative to a user's head.
17. The method of clause 12, wherein the feature extraction neural network comprises a recurrent neural network.
18. The method of clause 12, wherein the one or more hearing devices comprises two hearing devices, and wherein the frequency transform streams from the two hearing devices train the feature extraction neural network to extract features that jointly correlate different frequency buckets between different ones of the frequency transform streams of the two hearing devices.
19. The method of clause 18, wherein the angles of arrival are within two hemispheres on two sides of a user's head in which the two hearing devices are installed.
20. A hearing system, comprising:
   a hearing device, comprising two or more different microphones mounted in a housing of the hearing device; and
   a second device operably coupled to the hearing device, wherein respective processors of the hearing device and the second device are operable via instructions to cooperatively perform:
      obtaining time domain signals from the microphones;
      transforming the time domain signals into respective frequency transform streams, the frequency transform streams characterizing phase information in the time domain signals;
      determining, from the frequency transform streams, features indicative of directional information of one or more sound sources;
      inputting the features to a classifier neural network, the classifier network trained to classify the features into probabilities of angles of arrival of the sound sources;
      based on the classification of the features, estimating one or more directions of arrival (DOA) of the sound sources; and
      using the estimated DOA to process sound in the hearing device.
21. The hearing system of clause 20, wherein the second device comprises a second hearing device.
22. The hearing system of clause 20, wherein the second device comprises a mobile device.

## Claims

1. A hearing system, comprising:
a first hearing device, comprising:
two or more different microphones mounted in a housing of the first hearing device; and
a processor operably coupled to the two or more microphones, the processor operable via instructions to:
obtain time domain signals from the microphones;
transform the time domain signals into respective frequency transform streams, the frequency transform streams characterizing phase information in the time domain signals;
determine, from the frequency transform streams, features indicative of directional information of one or more sound sources;
input the features to a classifier neural network, the classifier network trained to classify the features into probabilities of angles of arrival of the sound sources;
based on the classification of the features, estimate one or more directions of arrival (DOA) of the sound sources; and
use the estimated DOA to process sound in the first hearing device.

2. The hearing system of claim 1, wherein the first hearing device further comprises:
a communication interface operable to communicate with a mobile device; and
a program operable on the mobile device to perform:
receiving data indicating the estimated DOA;
graphically representing the data on a user interface of the mobile device as selectable elements identifying a relative location of the sound sources; and
in response to a user selection of one of the selectable elements, sending a message to the first hearing device indicating the user selection; and
wherein the first hearing device receives the message, and wherein using the data indicating the one or more directions to process sound comprises emphasizing a selected direction associated with the user selection.

3. The hearing system of claim 1 or claim 2, wherein using the estimated DOA comprises increasing or decreasing amplitude of selected ones of the sound sources, and/or, wherein using the estimated DOA comprises performing adaptive echo cancellation.

4. The hearing system of any of claims 1 to 3, wherein angles in the estimated DOA are within a hemisphere on a side of a user's head in which the first hearing device is installed.

5. The hearing system of any of claims 1 to 4, wherein the classifier neural network comprises a recurrent neural network.

6. The hearing system of claim 1, further comprising a second hearing device functionally equivalent to the first hearing device as set forth in claim 1, the first and second hearing devices comprising respective first and second data interfaces for communication with each other, wherein the processor of the first hearing device is operable to:
receive from the second hearing device a received data stream comprising a second estimated DOA or other second data usable to compute the second estimated DOA;
create a combined estimated DOA using the received data stream; and
use the combined estimated DOA to process the sound in the first hearing device.

7. The hearing system of claim 6, wherein the other second data comprises second features from a second frequency transform streams of the second hearing device.

8. The hearing system of claim 7, wherein the second features are reduced in size before being sent via the received data stream, and optionally, wherein reducing the size of the second features comprises at least one of a reduction in time interval and a reduction in number of frequency buckets.

9. The hearing system of any of claims 6 to 8, further comprising transmitting to the second hearing device a transmitted data stream comprising the estimated DOA or other local data usable to compute the estimated DOA, the second hearing device creating a second combined estimated DOA using the transmitted data stream and using the second combined estimated DOA to process second sound in the second hearing device.

10. A method of training a classifier neural network for direction of arrival (DOA) estimation, the method comprising:
installing one or more hearing devices into a test fixture;
playing test audio from an array of transducers that emit the test audio at a plurality of different angles relative to the test fixture, the test audio associated with the plurality of different angles in a test data set;
receiving time domain signals representing the test audio from two or more microphones of each the one or more hearing devices;
transforming the time domain signals into frequency transform streams, the frequency transform streams characterizing phase information in the two or more time domain signals;
inputting the frequency transform streams to train a feature extraction neural network to extract features that jointly correlate different frequency buckets between different ones of the frequency transform streams; and
using the features of the trained feature extraction neural network and the plurality of different angles from the test data set to train the classifier neural network to output a probability of angles of arrival of the test audio.

11. The method of claim 10, further comprising using the trained feature extraction neural network and the trained classifier neural network to process sound in a fielded hearing device.

12. The method of claim 10 or claim 11, wherein using the trained classifier neural network to process sound comprises using the trained classifier neural network for adaptive echo cancellation.

13. The method of any of claims 10 to 12, wherein the angles of arrival are within a hemisphere on a side of a user's head in which the hearing device is installed, and/or, wherein the angles of arrival include three-dimensional angles indicative of height relative to a user's head.

14. The method of any of claims 10 to 13, wherein the feature extraction neural network comprises a recurrent neural network.

15. The method of any of claims 10 to 14, wherein the one or more hearing devices comprises two hearing devices, and wherein the frequency transform streams from the two hearing devices train the feature extraction neural network to extract features that jointly correlate different frequency buckets between different ones of the frequency transform streams of the two hearing devices, and optionally, wherein the angles of arrival are within two hemispheres on two sides of a user's head in which the two hearing devices are installed.
